# FASCICULE DE BREVET EUROPEEN

(11) **EP 1 337 594 B1**
(45) Date de publication et mention de la délivrance du brevet: **04.07.2007**
(21) Numéro de dépôt: 01993653.3
(22) Date de dépôt: 07.11.2001
(51) Int. Cl.: C09C 1/36, C09C 3/10

(54) **DISPERSION AQUEUSE DE DIOXYDE DE TITANE, SUBSTRAT OBTENU A PARTIR DE CETTE DISPERSION ET PROCEDE D'AUTONETTOYAGE DUDIT SUBSTRAT**
WÄSSRIGE TITANDIOXIDDISPERSION, DARAUS ERHALTENES SUBSTRAT UND SELBSTREINIGUNGSVERFAHREN FÜR DAS SUBSTRAT
TITANIUM DIOXIDE AQUEOUS DISPERSION, SUBSTRATE OBTAINED FROM SAID DISPERSION AND SELF-CLEANING METHOD FOR SAID SUBSTRATE

(30) Priorité: 10.11.2000 FR 0014474
(43) Date de publication de la demande: 27.08.2003
(73) Titulaire: RHODIA CHIMIE, 92512 Boulogne Billancourt Cedex (FR)
(72) Inventeur: GEFFROY, Cédric, tite Villette 86000 POITIERS (FR); CHARVET, Céline, F-75018 PARIS (FR); AUBAY, Eric, F-94170 LE PERREUX-SUR-MARNE (FR)
(74) Mandataire: Fabre, Madeleine-France
(86) Numéro de dépôt international: PCT/FR2001/003445
(87) Numéro de publication internationale: WO 2002/038682

(56) Documents cités:
- EP-A- 1 052 225
- WO-A-00/49099
- WO-A-97/10185
- WO-A-99/57075
- FR-A- 2 729 673
- US-A- 5 534 585

## Description

La présente invention a pour objet une dispersion aqueuse de dioxyde de titane, le substrat recouvert d'une couche obtenue à partir de cette dispersion ainsi qu'un procédé d'auto-nettoyage de ce substrat.

Le dioxyde de titane est connu depuis longtemps pour son activité photocatalytique. Sous l'effet d'un rayonnement ultra-violet, le dioxyde de titane en présence d'oxygène entraîne la formation d'espèces actives capables de dégrader des espèces organiques. Il est par exemple connu dans la demande de brevet français n° 95 00821 du 25 janvier 1996 d'utiliser des nanoparticules de dioxyde de titane comme agent bactéricide et photo oxydant dans les compositions détergentes pour le lavage du linge ou des surfaces.

Il existe aussi de nombreuses publications décrivant l'utilisation de substrats recouverts d'une couche de TiO₂ pour éviter l'encrassement de ces substrats.

US-A-5 534 585 décrit des particules de dioxyde de titane sur lesquelles sont greffées des particules polymériques permettant l'obtention de dispersions aqueuses stables de dioxyde de titane polymériquement modifié.

EP-A-1 052 225 divulgue une dispersion neutre de dioxyde de titane capable de former un film protecteur transparent.

Le but de la présente invention est de proposer une dispersion aqueuse à base de dioxyde de titane facile d'utilisation sur un grand nombre de supports et qui retarde l'encrassement de tels supports afin de réduire la fréquence de nettoyage.

Un autre but est de proposer des dispersions qui permettent d'obtenir des couches, invisibles à l'oeil nu, qui présentent une bonne résistance mécanique et une efficacité photocatalytique améliorée.

Ces buts et d'autres qui apparaîtront à la lecture de la description sont atteints par la présente invention qui concerne une dispersion aqueuse comprenant des particules de dioxyde de titane photocatalytique, un agent dispersant hydrosoluble anionique de masse moléculaire inférieure ou égale à 5000, et un polymère filmogène hydrosoluble ampholyte dont la charge anionique est supérieure ou égale à la charge cationique, le pH de la dispersion étant supérieur ou égal à 3.

L'invention concerne aussi les substrats recouverts d'une couche obtenue à partir de cette dispersion ainsi qu'un procédé d'auto-nettoyage de ces substrats.

Ces dispersions peuvent être utilisées dans des domaines variés pour l'auto-nettoyage de surfaces dures qui sont susceptibles d'être encrassées par des polluants organiques. De telles surfaces de vitrages sont par exemple les faïences de salles de bains, les sols, les façades etc ...

La dispersion de la présente invention comprend généralement des particules de dioxyde de titane majoritairement sous forme anatase. Le dioxyde de titane utile est de préférence sous forme de nanoparticules de taille élémentaire inférieure à 100 nm, avantageusement entre 20 et 60 nm. Le dioxyde de titane peut présenter une surface spécifique supérieure ou égale à 50 m²/g, de préférence de l'ordre de 100 à 300 m²/g.

La surface spécifique donnée est une surface BET. On entend par surface BET, la surface spécifique déterminée par adsorption d'azote conformément à la norme ASTM D 3663-78 établie à partir de la méthode BRUNAUER - EMMETT - TELLER décrite dans le périodique "The Journal of the american Society", 60, 309 (1938).

La taille des particules élémentaires de dioxyde de titane selon l'invention est mesurée par microscopie électronique par transmission (MET). La taille des particules indiquée précédemment est la taille moyenne des particules élémentaires de dioxyde de titane présentes dans la dispersion.

Au sein de ladite dispersion, les particules élémentaires peuvent être présentes aussi bien sous forme d'agrégats que de particules élémentaires.

Pour une bonne réalisation de l'invention, la dispersion comprend une quantité de dioxyde de titane de l'ordre de 0,001 à 10 % par rapport au poids de la dispersion, de préférence de l'ordre de 0,005 à 2%.

La dispersion de la présente invention contient un agent dispersant hydrosoluble anionique de faible masse moléculaire. Dans le cadre de l'invention, on appelle masse moléculaire, la masse moléculaire en poids Mw (équivalent polyoxyethylene), déterminée par chromatographie d'exclusion de taille sur colonne Shodex à l'aide d'un éluant LiNO₃ 0,5 M.

Selon l'invention, un agent dispersant hydrosoluble est un agent qui permet de maintenir les nanoparticules de dioxyde de titane non agrégées dans l'eau lorsque le pH varie entre 3 et 12, et qui, lorsqu'il est dissous dans l'eau, donne une solution parfaitement limpide dont la turbidité est proche de zéro.

L'agent dispersant hydrosoluble anionique de l'invention est par exemple choisi parmi les composés capables de complexer les métaux en solution, en particulier, les composés capables de complexer le titane en solution. De tels composés sont par exemple les composés ou polymères obtenus à partir de dérivés du phosphate, du phosphonate, de phosphite, des dérivés carboxyliques ou hydroxycarboxyliques, seul ou en mélange. A titre d'exemple, on peut citer les polymères d'acide acrylique et/ou d'acide méthacrylique, les polymères vinylphosphoniques, l'acide citrique, le citrate, les sels de tripolyphosphate. Selon un mode de réalisation particulier, cet agent dispersant hydrosoluble anionique est un polymère d'acide (meth)acrylique (homopolymère ou copolymère) de préférence un copolymère contenant majoritairement des motifs acryliques ou un homopolymère d'acide acrylique, l'acide citrique ou un sel de tripolyphosphate.

Pour une bonne réalisation de l'invention, la dispersion comprend une quantité d'agent dispersant hydrosoluble de l'ordre de 0,001 à 2 % par rapport au poids de la dispersion.

La dispersion aqueuse de l'invention comprend aussi un polymère filmogène hydrosoluble ampholyte avec un rapport du nombre total de charges anioniques au nombre total de charges cationiques supérieur ou égal à 1. Ce rapport est de préférence supérieur ou égal à 3.

Dans le cadre de l'invention, le polymère ampholyte est un polymère qui comprend des charges anioniques ou potentiellement anioniques en fonction du pH et des charges cationiques ou potentiellement cationiques en fonction du pH, les charges potentiellement anioniques ou potentiellement cationiques étant prises en compte pour le calcul du rapport du nombre total de charges anioniques au nombre total de charges cationiques. Par exemple, un polymère comprenant des fonctions carboxyliques est un polymère comprenant des charges potentiellement anioniques en fonction du pH.

Selon l'invention, ledit polymère ampholyte est considéré comme hydrosoluble lorsqu'au moins 70% de son poids est soluble dans l'eau à un pH de 3 à 12.

Le polymère filmogène ampholyte présente généralement une masse moléculaire inférieure à 500 000 g/mol, déterminée par chromatographie de perméation de gel aqueux (GPC) .

Pour une bonne réalisation de l'invention, la dispersion comprend une quantité de polymère filmogène hydrosoluble ampholyte de l'ordre de 0,001 à 2% par rapport au poids de la dispersion, de préférence de l'ordre de 0,001 à 0, 1 %.

Le polymère filmogène hydrosoluble ampholyte peut être obtenu à partir de monomères à insaturation éthylénique anioniques et cationiques. Il peut aussi être obtenu à partir d'un mélange de monomères contenant de plus des monomères neutres.

Selon un mode de réalisation particulier, les monomères à insaturation éthylénique anioniques peuvent être choisis parmi les acides ou anhydrides acrylique, méthacrylique, fumarique, maléique, itaconique, N-méthacroyl alanine, N-acryloyl-hydroxy-glycine ... ou leurs sels hydrosolubles ; les monomères éthyléniquement insaturés hydrosolubles sulfonés ou phosphonés, tels que l'acrylate de sulfopropyle ou ses sels hydrosolubles, les styrène sulfonates hydrosolubles, l'acide vinylsulfonique et ses sels hydrosolubles ou l'acide vinylphosphonique et ses sels hydrosolubles.

Les monomères à insaturation éthylénique cationiques peuvent être choisis parmi
* les monomères aminoacryloyles ou acryloyloxy comme le chlorure de triméthylaminopropylméthacrylate, le chlorure ou le bromure de triméthylaminoéthylacrylamide ou méthacrylamide, le méthylsulfate de triméthylaminobutylacrylamide ou méthacrylamide, le méthylsulfate de triméthylaminopropylméthacrylamide (MES), le chlorure de (3-méthacrylamidopropyl)triméthylammonium (MAPTAC), le chlorure de (3-acrylamidopropyl)triméthylammonium (APTAC), le chlorure ou le méthylsulfate de méthacryloyloxyéthyl triméthylammonium, le chlorure d'acryloyloxyéthyl triméthylammonium ;
* le bromure, chlorure ou méthylsulfate de 1-éthyl 2-vinylpyridinium ;
* les monomères N,N-dialkyldiallylamines comme le chlorure de N,N-diméthyldiallylammonium (DADMAC) ;
* les monomères polyquaternaires comme le chlorure de diméthylaminopropylméthacrylamide,N-(3-chloro-2-hydroxypropyl)triméthylammonium (DIQUAT) ...

Les monomères neutres à insaturation éthyléniques peuvent être choisis parmi l'acrylamide, la N-isopropylacrylamide, la N,N-diméthylacrylamide, le diméthylaminoéthylméthacrylate (DMAEMA), le diméthylaminopropylméthacrylamide, l'alcool vinylique, les acrylates ou méthacrylates d'alkyle ou d'hydroxyalkyle, les acrylates ou méthacrylates de polyoxyalkylèneglycols ...

On peut citer tout particulièrement, comme polymère ampholyte, les copolymères ou terpolymères
* MAPTAC/acide acrylique ou méthacrylique ; DIQUAT/acide acrylique ou méthacrylique ; DADMAC/acide acrylique ou méthacrylique ;
* MES/acide acrylique ou méthacrylique/DMAEMA ;
* MAPTAC/acide acrylique/acrylamide ; MAPTAC/anhydride maléique/acrylamide ; MAPTAC/acide vinyl sulfonique/acrylamide ;
* DADMAC/acide acrylique/acrylamide ; DADMAC/anhydride maléique/acrylamide ; DADMAC/acide vinyl sulfonique/acrylamide ;
* DIQUAT/acide acrylique/acrylamide ; DIQUAT/anhydride maléique/acrylamide ; DIQUAT/acide vinyl sulfonique/acrylamide ;
avec un rapport du nombre total de charges anioniques au nombre total de charges cationiques supérieur ou égal à 1, de préférence supérieur ou égal à 3.

Selon un mode de réalisation particulier, le polymère filmogène hydrosoluble ampholyte est un polymère organique oxydable choisi parmi les polymères définis précédemment qui sont capables de former, avant exposition au rayonnement UV, une couche invisible à l'oeil nu, hydrophile dont l'angle de mouillage est inférieur à 20°, de préférence inférieur à 10°.

Le pH de la dispersion est généralement compris entre 3 et 12 et plus particulièrement entre 5 et 11.

Si nécessaire des régulateurs de pH peuvent être présents ; on peut mentionner des acides minéraux ou organiques comme les acides chlorhydrique, nitrique, sulfurique, phosphoriques, citrique, glutarique, adipique, succinique, des bases comme l'ammoniaque, les hydroxydes de métaux alcalins, le carbonate de sodium, la triéthanolamine. On choisira cet agent en fonction du pH souhaité de la dispersion. Pour un pH supérieur ou égal à 5, on préfère ajuster le pH au moyen de base forte telle que l'hydroxyde de sodium.

La dispersion aqueuse de la présente invention peut contenir un alcool hydrosoluble. Parmi ces alcools, on peut citer en particulier les monoalcools aliphatiques de point d'ébullition inférieur à 100°C tels que l'éthanol, l'isopropanol, les diols tels que l'éthylène glycol, etc ...

La dispersion peut en outre contenir d'autres additifs solubles ou dispersables, additifs pouvant favoriser sa stabilité, sa mouillabilité, augmenter son caractère filmogène, son caractère biocide ou apporter d'autres propriétés supplémentaires.

Comme exemples d'additifs, on peut citer :
- des agents tensioactifs non-ioniques favorisant la mouillabilité, du type alkylphénols en C₆-C₁₂ polyoxyéthylénés, alcools aliphatiques en C₈-C₂₂ polyoxyéthylénés et/ou polyoxypropylénés, les copolymères bloc oxyde d'éthylène - oxyde de propylène, les amides carboxyliques éventuellement polyoxyéthylénés,
- des agents tensioactifs anioniques ou amphotères comme dispersants, agents du type savons de métaux alcalins (sels alcalins d'acides gras en C₈-C₂₄), sulfonates alcalins (alkylbenzène sulfonates en C₈-C₁₃, alkylsulfonates en C₁₂-C₁₆), alcools gras en C₆-C₁₆ oxyéthylénés et sulfatés, alkylphénols en C₈-C₁₃ oxyéthylénés et sulfatés, les sulfosuccinates alcalins (alkylsulfosuccinates en C₁₂-C₁₆)..., bétaïnes ...
- des biocides ou bactériostatiques susceptibles d'améliorer le caractère biocide des dispersions notamment en cas de luminosité insuffisante, comme les agents tensioactifs cationiques (halogénures d'alkyldiméthylammonium ...), les biocides halogénures d'ammonium quaternaire ou de phosphonium, les biocides amphotères dérivés des glycines, les biocides phénoliques, les biocides dérivés de la chlorhexidine, les hypochlorites, les biocides ou polymères filmogènes polyammonium quaternaire ...
- des agents antisalissure filmogènes comme les polyesters téréphtaliques éventuellement sulfonés...
- d'autres homopolymères ou copolymères filmogènes,
- des polyesters téréphtaliques présentant en outre des propriétés anti-salissure
- des parfums, des colorants ...

Ces différents additifs peuvent être présents à raison de 0 à 15% en poids de ladite dispersion.

Selon un mode de réalisation particulier, la dispersion aqueuse de la présente invention comprend :
- de l'ordre de 0,001 à 10% en poids, de préférence de l'ordre de 0,005 à 2% en poids de dioxyde de titane se présentant sous forme de particules élémentaires de taille inférieure à 100 nm et de surface spécifique supérieure à 50 m²/g,
- de l'ordre de 0,001 à 2 % en poids d'au moins un agent dispersant hydrosoluble anionique, et
- de l'ordre de 0,001 à 2% de son poids, de préférence de l'ordre de 0,001 à 0,1 % en poids d'au moins un polymère filmogène hydrosoluble ampholyte.

Une dispersion tout particulièrement intéressante comprend :
- de l'ordre de 0,001 à 1% de dioxyde de titane se présentant sous forme de particules élémentaires de taille inférieure à 100 nm et de surface spécifique supérieure à 50 m²/g, de préférence supérieure à 100 m²/g,
- de l'ordre de 0,005 à 1% en poids d'acide citrique, et
- de l'ordre de 0,001 à 0,05% de polymère ampholyte acide acrylique (AA)/MAPTAC.

Ladite dispersion peut être obtenue par mélange de ses différents composants à température ambiante. Selon un mode de réalisation particulier, le dioxyde de titane est ajouté à l'agent dispersant à pH inférieur à 3, puis le pH est ajusté à la valeur souhaitée par addition d'une base forte. On ajoute alors au mélange le polymère filmogène.

Cette dispersion permet d'obtenir des substrats auto-nettoyants par application de la dispersion décrite précédemment sur ce substrat pour former une couche photoactive, suivi du séchage de la couche ainsi obtenue.

L'application de la dispersion sur le substrat pour former la couche photoactive peut être effectuée par n'importe quelle méthode de couchage connue par exemple par trempage, pulvérisation fine, enduction par application à l'aide d'une éponge, d'une serpillière ou à l'aide d'un matériau cellulosique préimprégné. La dispersion peut être appliquée sur une ou plusieurs faces du substrat.

La couche est ensuite séchée à température ambiante ou par chauffage à une température inférieure à la température de dégradation des composés organiques présents dans la couche.

La couche présente généralement une teneur en TiO₂ supérieure à 0,05 g/m², de préférence comprise entre 0,01 et 20 mg/m².

Selon un mode de réalisation préféré, la couche présente un angle de contact inférieur à 10°.

On a pu observer que les couches obtenues à partir de la dispersion de la présente invention présentent une bonne rémanence après lavage à l'eau. On obtient ainsi des couches présentant une bonne résistante mécanique.

Les substrats qui peuvent être utilisés sont très variés. Par exemple on peut utiliser les surfaces de vitrages, les carrelages, les faïences, etc ... Un substrat particulièrement utile est la surface de vitrages.

Un dernier objet de l'invention consiste en un procédé d'auto-nettoyage d'un substrat qui comprend l'exposition au rayonnement UV d'un substrat recouvert d'une couche photoactive obtenue à partir de la dispersion décrite précédemment.

Un tel procédé permet une élimination des polluants organiques uniquement par exposition au rayonnement UV. On dispose ainsi d'un substrat auto-nettoyant lorsqu'il est exposé. Lorsque l'activité photocatalytique du substrat diminue, il suffit de pulvériser à nouveau la dispersion de la présente invention pour retrouver une couche active. Ce procédé est particulièrement adapté pour un substrat en verre. En effet, à partir de la dispersion de la présente invention, on obtient avantageusement une couche invisible à l'oeil nu qui, sur un vitrage, est parfaitement invisible. Lorsqu'on expose un tel vitrage comportant des traces de doigt à une exposition UV, les traces de doigt sont réduites voire éliminées sous la seule exposition au rayonnement.

Les exemples suivants sont donnés à titre illustratif et ne limitent en rien la portée de la présente invention.

### Exemple 1 : Préparation d'un sol de TiO₂

### 1. Hydrolyse

On ajoute successivement à 394,7 g d'une solution d'oxychlorure de titane à 1,9 mol/kg :
- 42,02 g d'acide chlorhydrique à 36 %,
- 4,73 g d'acide citrique,
- 547,1 g d'eau épurée,
- 11,36 g (0,2 % en poids par rapport au TiO₂) de germes d'anatase présentant une taille comprise entre 5 et 6 nm.
   Le mélange est porté à ébullition et y est maintenu pendant 3 h.
   La suspension obtenue est diluée 10 fois puis lavée par dialyse à l'eau jusqu'à élimination complète des chlorures et obtention d'un pH égal à 3. On obtient ainsi une dispersion de TiO₂ à 5 g/l.
   On obtient une dispersion aqueuse comprenant des particules de diamètre 25 nm mesuré par MET. L'analyse par diffraction X indique que les particules sont à base de dioxyde de titane uniquement sous forme anatase à 80 % en poids. Les particules obtenues sont poreuses.

### Exemple 2 : Préparation du substrat recouvert de la couche photocatalytique

On applique 40 µg/cm² de chacune des dispersions D-0 à D-10 décrites ci après sur du verre à l'aide d'une micropipette.

Après séchage à température ambiante,
- on note pour chaque substrat traité l'aspect du film par un test visuel (trouble, taches, invisible) ;
- on mesure pour chaque substrat traité l'angle de contact et l'activité photocatalytique ;
- on évalue par microscopie à force atomique la rémanence du film de TiO₂ après lavage à l'eau (on laisse tremper le substrat traité dans l'eau pendant 1 h) et séchage.

L'angle de contact est mesuré au moyen d'un appareil de mesure commercialisé par IT concept sous le nom SDT 200. Une goutte d'eau de 0,5 µL est automatiquement déposée à la surface de la couche de TiO₂ et le profil de la goutte est enregistré puis analysé par traitement de l'image. Par le traitement d'image, on obtient l'angle formé par la goutte. Plus l'angle est élevé, plus la surface est hydrophobe.

L'activité photocatalytique est mesurée par un test d'oxydation de l'acide palmitique décrit dans WO 97/10185.

Ce test consiste à déposer sur le substrat à évaluer une couche d'acide palmitique et à l'irradier par des U.V.A. de manière à la dégrader par photocatalyse.

On pulvérise sur les substrats à tester une solution chloroformique d'acide palmitique à 8 g/l. La quantité d'acide palmitique déposée par 30 cm² de substrat est de 1,5 mg. Puis, les substrats sont introduits dans un réacteur étanche entourés de six lampes UV présentant un maximum d'émission entre 300 et 400 nm. Les substrats à tester ainsi irradiés reçoivent une puissance de 10 W/m². L'irradiation dure au maximum 40 h.

Les substrats sont ensuite retirés du réacteur. Pour doser l'acide palmitique restant sur les substrats, ces derniers sont lavés avec une solution d'acide chloroformique ; la solution obtenue est alors dosée par chromatographie en phase liquide afin de doser l'acide palmitique restant et déterminer le rendement d'oxydation de l'acide palmitique.
D-0 : Dispersion aqueuse de TiO₂ contenant 5g/l de TiO2, et de pH = 1,5 obtenue par dilution dans l'eau du sol de l'exemple 1.
D-1 : Dispersion D-0 contenant de plus du tripolyphosphate de sodium (9 mg/m² de TiO₂). Le pH de la dispersion est ajusté par ajout de soude à 5,5.
D-2 : Dispersion D-1 dans laquelle on a ajouté un polymère filmogène hydrosoluble non ionique (polyoxyéthylène de masse moléculaire 10000 g/mol) (0,5 mg/m² de TiO₂). Le pH de la dispersion est ajusté à 5,5.
D-3 : Dispersion D-1 dans laquelle on a ajouté un polymère anionique [poly (acide acrylique) Mw 2000] (0,5 mg/m² de TiO₂). Le pH de la dispersion est ajusté à 5,5.
D-4 : Dispersion D-1 dans laquelle on a ajouté un polymère cationique (Jeffamine 2000) (5 mg/m² de TiO₂). Le pH de la dispersion est ajusté à 5,5.
D-5: dispersion D-1 dans laquelle on a ajouté un polymère ampholyte AA/MAPTAC 1/1 (0,1 mg/m² de TiO₂). Le pH de la dispersion est ajusté à 7,5.
D-6 : dispersion D-1 dans laquelle on a ajouté un polymère ampholyte AA/MAPTAC 7/3 (0,1 mg/m² de TiO₂). Le pH de la dispersion est ajusté à 7,5.
D-7 : Dispersion D-1 dans laquelle on a ajouté un polymère ampholyte AA/MAPTAC 1/3 (0,1 mg/m² de TiO₂). La suspension flocule aussitôt ce qui ne permet pas la formation d'une couche.
D-8 : Dispersion D-0 dans laquelle on a ajouté de l'acide citrique (agent dispersant) (2mg/m² de TiO₂) et un polymère ampholyte AA/MAPTAC 7/3 (0,1mg/m² de TiO₂). Le pH de la dispersion est ajusté à 7,5.
D-9 : A la dispersion D-0, on ajoute de l'acide citrique (2 mg/m² de TiO₂)
D-10 : A la dispersion D-0, on ajoute de l'acide polyacrylique (agent dispersant) (0,5mg/m² de TiO₂ ayant une masse moléculaire supérieure à 10000. La suspension s'agrège dans le temps (observation faite en mesurant la taille des particules en suspension par diffusion quasiélastique de la lumière).

Les résultats sont reportés dans le tableau suivant :

| **Dispersion** | **Apparence du film** | **Angle de contact o** | **Rendement d'oxydation** | **% Ti02 éliminé** |
|---|---|---|---|---|
| **D-0 (référence)** | trouble | 30 | 82 % | 58 % |
| **D-1 comparatif** | trouble | 26 | 87,8 % | 28 % |
| **D-2 comparatif** | trouble | 9 | 97,5 % | 47 % |
| **D-3 comparatif** | trouble | 6 | 86,6 % | 20 % |
| **D-4 comparatif** | taches | 17 | 39 % | Non mesurable |
| **D-5 invention** | invisible | 5 | 93,9 | 22 % |
| **D-6 invention** | invisible | 5 | 86,6 % | 60% |
| **D-8 invention** | invisible | 5 | 72 % | 45% |
| **D-9 comparatif** | invisible | 5 | 82,9 % | 94 % |

Cet exemple montre que les dispersions selon l'invention permettent d'obtenir des couches invisibles présentant :
- un effet photocatalytique voisin de celui obtenu à partir d'une dispersion de TiO₂ de pH 1,5 (D-0)
- une rémanence élevée
- une hydrophilie accrue retardant l'encrassement de la surface par des polluants organiques,
et ce tout en conservant un rendement d'oxydation élevé.
Par ailleurs, les dispersions de l'invention sont stables.

## Revendications

1. Dispersion aqueuse comprenant des particules de dioxyde de titane photocatalytique, un agent dispersant hydrosoluble anionique de masse moléculaire inférieure ou égale à 5000, et un polymère filmogène hydrosoluble ampholyte dont la charge anionique est supérieure ou égale à la charge cationique, le pH de la dispersion étant supérieur ou égal à 3.

2. Dispersion selon la revendication 1, **caractérisée en ce que** les particules de dioxyde de titane sont majoritairement sous forme d'anatase.

3. Dispersion selon la revendication 1 ou 2), **caractérisée en ce que** le dioxyde titane se présente sous forme de particules élémentaires de taille inférieure à 100nm, de préférence de l'ordre de 20 à 60 nm.

4. Dispersion selon l'une quelconque des revendications 1 à 3), **caractérisée en ce que** les particules de dioxyde titane présentent une surface spécifique supérieure ou égale à 50 m²/g, de préférence de l'ordre de 100 à 300 m²/g.

5. Dispersion selon l'une quelconque des revendications 1 à 4), **caractérisée en ce que** la quantité de dioxyde de titane est de l'ordre de 0,001 à 10 % par rapport au poids de la dispersion, de préférence de l'ordre de 0,005 à 2%.

6. Dispersion selon l'une quelconque des revendications 1 à 5), **caractérisée en ce que** l'agent dispersant hydrosoluble anionique est choisi parmi les homopolymères d'acide acrylique ou méthacrylique, les copolymères d'acide (meth)acryliques, l'acide citrique, les sels de tripolyphosphate.

7. Dispersion selon l'une quelconque des revendications 1 à 6), **caractérisée en ce que** la quantité d'agent dispersant est de l'ordre de 0,001 à 2 % par rapport au poids de la dispersion.

8. Dispersion selon l'une quelconque des revendications 1 à 7), **caractérisée en ce que** le polymère ampholyte est obtenu à partir de monomères anioniques éthyléniquement insaturés choisis parmi les acides ou anhydrides acrylique, méthacrylique, fumarique, maléique, itaconique, N-méthacroyl alanine, N-acryloyl-hydroxy-glycine, les monomères éthyléniquement insaturés hydrosolubles sulfonés ou phosphonés, tels que l'acrylate de sulfopropyle ou ses sels hydrosolubles, les styrène sulfonates hydrosolubles, l'acide vinylsulfonique et ses sels hydrosolubles ou l'acide vinylphosphonique et ses sels hydrosolubles, et de monomères cationiques éthyléniquement insaturés choisis parmi les monomères aminoacryloyles ou acryloyloxy comme le chlorure de triméthylaminopropylméthacrylate, le chlorure ou le bromure de triméthylaminoéthylacrylamide ou méthacrylamide, le méthylsulfate de triméthylaminobutylacrylamide ou méthacrylamide, le méthylsulfate de triméthylaminopropylméthacrylamide (MES), le chlorure de (3-méthacrylamidopropyl)triméthylammonium (MAPTAC), le chlorure de (3-acrylamidopropyl)triméthylammonium (APTAC), le chlorure ou le méthylsulfate de méthacryloyloxyéthyl triméthylammonium, le chlorure d'acryloyloxyéthyl triméthylammonium, le bromure, chlorure ou méthylsulfate de 1-éthyl 2-vinylpyridinium, les monomères N,N-dialkyldiallylamines comme le chlorure de N,N-diméthyldiallylammonium (DADMAC), les monomères polyquaternaires comme le chlorure de diméthylaminopropylméthacrylamide, le N-(3-chloro-2-hydroxypropyl)triméthylammonium (DIQUAT), et éventuellement de monomères éthyléniquement insaturés hydrosolubles neutres tels que l'acrylamide, la N-isopropylacrylamide, la N,N-diméthylacrylamide, le diméthylaminoéthylméthacrylate (DMAEMA), le diméthylaminopropylméthacrylamide, l'alcool vinylique, les acrylates ou méthacrylates d'alkyle ou d'hydroxyalkyle, les acrylates ou méthacrylates de polyoxyalkylèneglycols.

9. Dispersion selon l'une quelconque des revendications 1 à 8), **caractérisée en ce que** le polymère ampholyte est choisi parmi les copolymères
* MAPTAC/acide acrylique ou méthacrylique ; DIQUAT/acide acrylique ou méthacrylique ; DADMAC/acide acrylique ou méthacrylique
* MES/acide acrylique ou méthacrylique/DMAEMA
* MAPTAC/acide acrylique/acrylamide ; MAPTAC/anhydride maléique/acrylamide ; MAPTAC/acide vinyl sulfonique/acrylamide
* DADMAC/acide acrylique/acrylamide ; DADMAC/anhydride maléique/acrylamide ; DADMAC/acide vinyl sulfonique/acrylamide
* DIQUAT/acide acrylique/acrylamide ; DIQUAT/anhydride maléique/acrylamide ; DIQUAT/acide vinyl sulfonique/acrylamide
ledit copolymère présentant un rapport du nombre total de charges anioniques au nombre total de charges cationiques supérieur ou égal à 1, de préférence supérieur ou égal à 3.

10. Dispersion selon l'une quelconque des revendications 1 à 9), **caractérisée en ce que** la quantité de polymère filmogène est de l'ordre de 0,001 à 2% par rapport au poids de la dispersion, de préférence de l'ordre de 0.001% à 0.1%.

11. Dispersion selon l'une quelconque des revendications 1 à 10), **caractérisée en ce que** le pH de ladite dispersion va de 3 à 12, de préférence de 5 à 11.

12. Dispersion selon l'une quelconque des revendications 1 à 11), **caractérisée en ce qu'**elle comprend :
- de l'ordre de 0,001 à 10% en poids, de préférence de l'ordre de 0,005 à 2% en poids de dioxyde de titane se présentant sous forme de particules élémentaires de taille inférieure à 100 nm et de surface spécifique supérieure à 50 m²/g,
- de l'ordre de 0,001 à 2 % en poids d'au moins un agent dispersant hydrosoluble anionique, et
- de l'ordre de 0,001 à 2% de son poids, de préférence de l'ordre de 0,001 à 0,1% en poids d'au moins un polymère filmogène hydrosoluble ampholyte.

13. Dispersion selon l'une quelconque des revendications 1 à 12), **caractérisée en ce qu'**elle comprend
- de l'ordre de 0,001 à 1% de dioxyde de titane se présentant sous forme de particules élémentaires de taille inférieure à 100 nm et de surface spécifique supérieure à 50 m²/g, de préférence supérieure à 100 m²/g,
- de l'ordre de 0,005 à 1% en poids d'acide citrique, et
- de l'ordre de 0,001 à 0,05% de polymère ampholyte acide acrylique (AA)/MAPTAC.

14. Dispersion selon l'une quelconque des revendications 1 à 13), **caractérisée en ce qu'**elle contient en outre un alcool hydrosoluble de point d'ébullition inférieur à 100°C.

15. Substrat autonettoyant composé d'une surface recouverte d'une couche obtenue par application sur ladite surface de la dispersion définie selon l'une quelconque des revendications 1) à 14) et séchage.

16. Substrat autonettoyant selon la revendication 15), **caractérisé en ce que** ladite couche a une teneur en dioxyde de titane est comprise entre 0,01 et 20 mg/m².

17. Substrat autonettoyant selon la revendication 15) ou 16), **caractérisé en ce que** ladite couche a un angle de contact d'au plus 10°.

18. Substrat autonettoyant selon l'une quelconque des revendications 15) à 17), **caractérisé en ce que** ladite surface est une surface de vitrage, de céramique ou de faïence.

19. Procédé d'auto-nettoyage de surfaces qui comprend l'exposition d'un substrat autonettoyant tel que défini précédemment à l'une quelconque des revendications 15) à 18) au rayonnement ultraviolet.

## Claims

1. Aqueous dispersion comprising photocatalytic titanium dioxide particles, an anionic water-soluble dispersant with a molecular mass of less than or equal to 5000, and an ampholytic water-soluble film-forming polymer whose anionic charge is greater than or equal to the cationic charge, the pH of the dispersion being greater than or equal to 3.

2. Dispersion according to Claim 1, **characterized in that** the titanium dioxide particles are mainly in anatase form.

3. Dispersion according to Claim 1 or 2, **characterized in that** the titanium dioxide is in the form of elementary particles less than 100 nm and preferably from about 20 to 60 nm in size.

4. Dispersion according to any one of Claims 1 to 3, **characterized in that** the titanium dioxide particles have a specific surface area of greater than or equal to 50 m²/g and preferably from about 100 to 300 m²/g.

5. Dispersion according to any one of Claims 1 to 4, **characterized in that** the amount of titanium dioxide is from about 0.001% to 10% and preferably from about 0.005% to 2% relative to the weight of the dispersion.

6. Dispersion according to any one of Claims 1 to 5, **characterized in that** the anionic water-soluble dispersant is chosen from acrylic acid or methacrylic acid homopolymers, (meth)acrylic acid copolymers, citric acid and tripolyphosphate salts.

7. Dispersion according to any one of Claims 1 to 6, **characterized in that** the amount of dispersant is from about 0.001% to 2% relative to the weight of the dispersion.

8. Dispersion according to any one of Claims 1 to 7, **characterized in that** the ampholytic polymer is obtained from ethylenically unsaturated anionic monomers chosen from acrylic, methacrylic, fumaric, maleic and itaconic acids or anhydrides, N-methacroylalanine, N-acryloyl-hydroxy-glycine, sulfonated or phosphonated water-soluble ethylenically unsaturated monomers, such as sulfopropyl acrylate or water-soluble salts thereof, water-soluble styrenesulfonates, vinylsulfonic acid and water-soluble salts thereof, or vinylphosphonic acid and water-soluble salts thereof, and ethylenically unsaturated cationic monomers chosen from aminoacryloyl or acryloyloxy monomers, for instance trimethylaminopropyl methacrylate chloride, trimethylaminoethylacrylamide or methacrylamide chloride or bromide, trimethylaminobutylacrylamide or methacrylamide methyl sulfate, trimethylaminopropylmethacrylamide methyl sulfate (MES), (3-methacrylamidopropyl)trimethylammonium chloride (MAPTAC), (3-acrylamidopropyl)trimethylammonium chloride (APTAC), methacryloyloxyethyltrimethylammonium chloride or methyl sulfate, acryloyloxyethyltrimethylammonium chloride, 1-ethyl-2-vinylpyridinium bromide, chloride or methyl sulfate, N,N-dialkyldiallylamine monomers, for instance N,N-dimethyldiallylammonium chloride (DADMAC), polyquaternary monomers, for instance dimethylaminopropylmethacrylamide chloride, N-(3-chloro-2-hydroxypropyl)trimethylammonium (Diquat), and optionally neutral water-soluble ethylenically unsaturated monomers such as acrylamide, N-isopropylacrylamide, N,N-dimethylacrylamide, dimethylaminoethyl methacrylate (DMAEMA), dimethylaminopropylmethacrylamide, vinyl alcohol, alkyl or hydroxyalkyl acrylates or methacrylates, and polyoxyalkylene glycol acrylates or methacrylates.

9. Dispersion according to any one of Claims 1 to 8, **characterized in that** the ampholytic polymer is chosen from the following copolymers:
* MAPTAC/acrylic or methacrylic acid; Diquat/acrylic or methacrylic acid; DADMAC/acrylic or methacrylic acid
* MES/acrylic or methacrylic acid/DMAEMA
* MAPTAC/acrylic acid/acrylamide; MAPTAC/maleic anhydride/acrylamide; MAPTAC/vinylsulfonic acid/acrylamide
* DADMAC/acrylic acid/acrylamide; DADMAC/maleic anhydride/acrylamide; DADMAC/vinylsulfonic acid/acrylamide
* Diquat/acrylic acid/acrylamide; Diquat/maleic anhydride/acrylamide; Diquat/vinylsulfonic acid/acrylamide
the said copolymer having a ratio of the total number of anionic charges to the total number of cationic charges of greater than or equal to 1 and preferably greater than or equal to 3.

10. Dispersion according to any one of Claims 1 to 9, **characterized in that** the amount of film-forming polymer is from about 0.001% to 2% and preferably from about 0.001% to 0.1% relative to the weight of the dispersion.

11. Dispersion according to any one of Claims 1 to 10, **characterized in that** the pH of the said dispersion ranges from 3 to 12 and preferably from 5 to 11.

12. Dispersion according to any one of Claims 1 to 11, **characterized in that** it comprises:
- from about 0.001% to 10% by weight and preferably from about 0.005% to 2% by weight of titanium dioxide in the form of elementary particles less than 100 nm in size and with a specific surface area of greater than 50 m²/g,
- from about 0.001% to 2% by weight of at least one anionic water-soluble dispersant, and
- from about 0.001% to 2% by weight and preferably from about 0.001% to 0.1% by weight of at least one ampholytic water-soluble film-forming polymer.

13. Dispersion according to any one of Claims 1 to 12, **characterized in that** it comprises
- from about 0.001% to 1% of titanium dioxide in the form of elementary particles less than 100 nm in size and with a specific surface area of greater than 50 m²/g and preferably greater than 100 m²/g,
- from about 0.005% to 1% by weight of citric acid, and
- from about 0.001% to 0.05% of acrylic acid (AA)/MAPTAC ampholytic polymer.

14. Dispersion according to any one of Claims 1 to 13, **characterized in that** it also contains a water-soluble alcohol with a boiling point of less than 100°C.

15. Self-cleaning substrate composed of a surface covered with a coat obtained by applying to the said surface the dispersion defined according to any one of Claims 1 to 14, and drying.

16. Self-cleaning substrate according to Claim 15, **characterized in that** the said coat has a titanium dioxide content of between 0.01 and 20 mg/m².

17. self-cleaning substrate according to Claim 15 or 16, **characterized in that** the said coat has a contact angle of not more than 10°.

18. Self-cleaning substrate according to any one of Claims 15 to 17, **characterized in that** the said surface is a glazed, ceramic or tiled surface.

19. Process for the self-cleaning of surfaces, which comprises the exposure of a self-cleaning substrate as defined above in any one of Claims 15 to 18 to ultraviolet radiation.

## Patentansprüche

1. Wässrige Dispersion, umfassend photokatalytische Titandioxid-Partikel, ein anionisches, wasserlösliches Dispersionsmittel einer molekularen Masse kleiner oder gleich 5000, und ein ampholytisches, wasserlösliches, filmbildendes Polymer, bei dem die anionische Ladung größer oder gleich der kationischen Ladung ist, wobei der pH-Wert der Dispersion größer oder gleich 3 ist.

2. Dispersion gemäß Anspruch 1, **dadurch gekennzeichnet, dass** die Titandioxid-Partikel mehrheitlich als Anatas vorliegen.

3. Dispersion gemäß Anspruch 1 oder 2, **dadurch gekennzeichnet, dass** das Titandioxid in Form von Elementarpartikeln einer Größe von weniger als 100 nm, vorzugsweise in der Größenordnung von 20 bis 60 nm vorliegt.

4. Dispersion gemäß einem der Ansprüche 1 bis 3, **dadurch gekennzeichnet, dass** die Titandioxid-Partikel eine spezifische Oberfläche aufweisen, die größer oder gleich 50 m²/g, vorzugsweise in der Größenordnung von 100 bis 300 m²/g ist.

5. Dispersion gemäß einem der Ansprüche 1 bis 4, **dadurch gekennzeichnet, dass** die Menge an Titandioxid in der Größenordnung von 0,001 bis 10% bezogen auf das Gewicht der Dispersion, vorzugsweise in der Größenordnung von 0,005 bis 2% liegt.

6. Dispersion gemäß einem der Ansprüche 1 bis 5, **dadurch gekennzeichnet, dass** das anionische, wasserlösliche Dispersionsmittel ausgewählt ist aus den Homopolymeren von Acrylsäure oder Methacrylsäure, den Copolymeren der (Meth)acrylsäuren, Zitronensäure, den Tripolyphosphatsalzen.

7. Dispersion gemäß einem der Ansprüche 1 bis 6, **dadurch gekennzeichnet, dass** die Menge an Dispersionsmittel in der Größenordnung von 0,001 bis 2% bezogen auf das Gewicht der Dispersion liegt.

8. Dispersion gemäß einem der Ansprüche 1 bis 7, **dadurch gekennzeichnet, dass** das ampholytische Polymer aus ethylenisch ungesättigten, anionischen Monomeren erhalten wird, die ausgewählt sind aus Acrylsäure, Methacrylsäure, Fumarsäure, Maleinsäure, Itaconsäure bzw. deren Anhydriden, N-Methacrylalanin, N-Acryloylhydroxyglycin, den wasserlöslichen, ethylenisch ungesättigten Monomeren mit Sulfonsäure- oder Phosphonsäurerest wie etwa Sulfopropylacrylat oder dessen wasserlösliche Salze, wasserlösliche Styrolsulfonate, Vinylsulfonsäure und deren wasserlösliche Salze oder Vinylphosphonsäure und deren wasserlösliche Salze, und ethylenisch ungesättigten, kationischen Monomeren, die ausgewählt sind aus Aminoacryloyl- oder Acryloyloxy-Monomeren, wie Trimethylaminopropylmethacrylat-chlorid, das Chlorid oder das Bromid von Trimethylaminoethylacrylamid oder -methacrylamid, das Methylsulfat von Trimethylaminobutylacrylamid oder -methacrylamid, Trimethylaminopropylmethacrylamid-methylsulfat (MES), (3-Methacrylamidopropyl)trimethylammoniumchlorid (MAPTAC), (3-Acrylamidopropyl)trimethylammoniumchlorid (APTAC), Methacryloyloxyethyl-trimethylammoniumchlorid oder -methylsulfat, Acryloyloxyethyl-trimethylammoniumchlorid, 1-Ethyl-2-vinylpyridiniumbromid, -chlorid oder -methylsulfat, N,N-Dialkyldiallylamin-Monomeren wie N,N-Dimethyldiallylammoniumchlorid (DADMAC), polyquartären Monomeren wie Dimethylaminopropylmethacrylamid-chlorid, N-(3-Chlor-2-hydroxypropyl)trimethylammonium (DIQUAT), sowie möglicherweise neutralen, wasserlöslichen, ethylenisch ungesättigten Monomeren, wie etwa Acrylamid, N-Isopropylacrylamid, N,N-Dimethylacrylamid, Dimethylaminoethylmethacrylat (DMAEMA), Dimethylaminopropylmethacrylamid, Vinylalkohol, Alkyl- oder Hydroxyalkyl-acrylaten oder -methacrylaten, Polyoxyalkylenglykolacrylaten oder -methacrylaten.

9. Dispersion gemäß einem der Ansprüche 1 bis 8, **dadurch gekennzeichnet, dass** das ampholytische Polymer ausgewählt ist aus den Copolymeren
- MAPTAC/Acryl- oder Methacrylsäure; DIQUAT/Acryl- oder Methacrylsäure; DADMAC/Acryl- oder Methacrylsäure
- MES/Acryl- oder Methacrylsäure/DMAEMA
- MAPTAC/Acrylsäure/Acrylamid; MAPTAC/Maleinsäureanhydrid/Acrylamid; MAPTAC/Vinylsulfonsäure/Acrylamid
- DADMAC/Acrylsäure/Acrylamid; DADMAC/Maleinsäureanhydrid/Acrylamid; DADMAC/Vinylsulfonsäure/Acrylamid
- DIQUAT/Acrylsäure/Acrylamid; DIQUAT/Maleinsäureanhydrid/Acrylamid; DIQUAT/Vinylsulfonsäure/Acrylamid,
wobei dieses Copolymer ein Verhältnis der Gesamtzahl der anionischen Ladungen zur Gesamtzahl der kationischen Ladungen von größer oder gleich 1, vorzugsweise von größer oder gleich 3 aufweist.

10. Dispersion gemäß einem der Ansprüche 1 bis 9, **dadurch gekennzeichnet, dass** die Menge an filmbildendem Polymer in der Größenordnung von 0,001 bis 2% bezogen auf das Gewicht der Dispersion, vorzugsweise in der Größenordnung von 0,001% bis 0,1% liegt.

11. Dispersion gemäß einem der Ansprüche 1 bis 10, **dadurch gekennzeichnet, dass** der pH-Wert dieser Dispersion von 3 bis 12, vorzugsweise von 5 bis 11 reicht.

12. Dispersion gemäß einem der Ansprüche 1 bis 11, **dadurch gekennzeichnet, dass** sie umfasst:
- eine Größenordnung von 0,001 bis 10 Gew.-%, vorzugsweise eine Größenordnung von 0,005 bis 2 Gew.-% an Titandioxid, das in Form von Elementarpartikeln einer Größe von weniger als 100 nm und einer spezifischen Oberfläche von mehr als 50 m²/g vorliegt,
- eine Größenordnung von 0,001 bis 2 Gew.-% an mindestens einem anionischen, wasserlöslichen Dispersionsmittel, und
- eine Größenordnung von 0,001 bis 2 Gew.-%, vorzugsweise eine Größenordnung von 0,001 bis 0,1 Gew.-% an mindestens einem ampholytischen, wasserlöslichen, filmbildenden Polymer.

13. Dispersion gemäß einem der Ansprüche 1 bis 12, **dadurch gekennzeichnet, dass** sie umfasst:
- eine Größenordnung von 0,001 bis 1% an Titandioxid, das in Form von Elementarpartikeln einer Größe von weniger als 100 nm und einer spezifischen Oberfläche von mehr als 50 m²/g, vorzugsweise mehr als 100 m²/g vorliegt,
- eine Größenordnung von 0,005 bis 1 Gew.-% Zitronensäure, und
- eine Größenordnung von 0,001 bis 0,05% des ampholytischen Polymers Acrylsäure (AA)/MAPTAC.

14. Dispersion gemäß einem der Ansprüche 1 bis 13, **dadurch gekennzeichnet, dass** sie außerdem einen wasserlöslichen Alkohol mit einem Siedepunkt von weniger als 100°C enthält.

15. Selbstreinigendes Substrat, das zusammengesetzt ist aus einer Oberfläche, die mit einer Schicht bedeckt ist, welche durch Auftragen der Dispersion, die gemäß einem der Ansprüche 1 bis 14 definiert ist, auf diese Oberfläche und Trocknen erhalten wird.

16. Selbstreinigendes Substrat gemäß Anspruch 15, **dadurch gekennzeichnet, dass** diese Schicht einen Gehalt an Titandioxid aufweist, der zwischen 0,01 und 20 mg/m² liegt.

17. Selbstreinigendes Substrat gemäß Anspruch 15 oder 16, **dadurch gekennzeichnet, dass** diese Schicht einen Kontaktwinkel von höchstens 10° besitzt.

18. Selbstreinigendes Substrat gemäß einem der Ansprüche 15 bis 17, **dadurch gekennzeichnet, dass** diese Oberfläche eine Glas-, Keramik- oder Steingut-Oberfläche ist.

19. Verfahren der Selbstreinigung von Oberflächen, das das Bestrahlen eines selbstreinigenden Substrats, wie es zuvor durch einen der Ansprüche 15 bis 18 definiert wurde, mit ultravioletter Strahlung umfasst.
